# EUROPEAN PATENT SPECIFICATION

(11) **EP 4 148 817 B1**
(45) Date of publication and mention of the grant of the patent: **08.04.2026**
(21) Application number: 21883164.2
(22) Date of filing: 18.10.2021
(51) Int. Cl.: H01M 4/13, H01M 4/62, H01M 10/052, H01M 4/36, H01M 4/38, H01M 10/0525, H01M 10/36, H01M 4/136, H01M 4/02

(54) **POSITIVE ELECTRODE FOR LITHIUM-SULFUR SECONDARY BATTERY, AND LITHIUM-SULFUR SECONDARY BATTERY COMPRISING SAME**
POSITIVELEKTRODE FÜR LITHIUM-SCHWEFEL-SEKUNDÄRBATTERIE UND LITHIUM-SCHWEFEL-SEKUNDÄRBATTERIE DAMIT
ÉLECTRODE POSITIVE POUR BATTERIE SECONDAIRE AU LITHIUM-SOUFRE, ET BATTERIE SECONDAIRE AU LITHIUM-SOUFRE LA COMPRENANT

(30) Priority: 22.10.2020 KR 20200137322
(43) Date of publication of application: 15.03.2023
(73) Proprietor: LG Energy Solution, Ltd., Seoul 07335 (KR); Gwangju Institute of Science and Technology, Gwangju 61005 (KR)
(72) Inventor: HONG, Kyungsik, Daejeon 34122 (KR); EOM, Kwangsup, Gwangju 61005 (KR); SONG, Hayong, Gwangju 61005 (KR); SHIN, Dongseok, Daejeon 34122 (KR); SOHN, Kwonnam, Daejeon 34122 (KR); KIM, Yun Kyoung, Daejeon 34122 (KR); LEE, Seungmin, Gwangju 61005 (KR)
(74) Representative: Goddar, Heinz J.
(86) International application number: PCT/KR2021/014506
(87) International publication number: WO 2022/086095

(56) References cited:
- CN-A- 106 927 498
- CN-A- 111 276 683
- JP-A- 2004 014 296
- KR-A- 20020 077 554
- KR-A- 20130 088 426
- KR-A- 20160 143 577
- KR-B1- 101 523 081
- KR-B1- 101 523 081
- US-A1- 2012 107 698

## Description

### [Technical Field]

The present invention relates to a positive electrode for a lithium-sulfur secondary battery and a lithium-sulfur secondary battery comprising the same. Specifically, the present invention relates to a positive electrode for a lithium-sulfur secondary battery comprising a multivalent metal salt and a lithium-sulfur secondary battery comprising the same.

The present application claims the benefit of priority based on Korean Patent Application No. 10-2020-0137322 filed on October 22, 2020.

### [Background Art]

As the application area of secondary battery are expanding to the electric vehicles (EV) or the energy storage devices (ESS), the lithium-ion secondary battery with relatively low weight-to-energy storage density (~ 250 Wh/kg) are facing limitations in application to such products. Alternatively, since the lithium-sulfur secondary battery can achieve the theoretically high weight-to-energy storage density (~ 2,600 Wh/kg), it is attracting attention as a next-generation secondary battery technology.

The lithium-sulfur secondary battery means a battery system using a sulfur-based material having an S-S bond (sulfur-sulfur bond) as a positive electrode active material and using lithium metal as a negative electrode active material. Sulfur, which is the main material of the positive electrode active material, has advantages that it is very rich in resources, is not toxic, and has a low atomic weight.

In the lithium-sulfur secondary battery, when discharging the battery, lithium which is a negative electrode active material is oxidized while releasing electron and thus ionizing, and the sulfur-based material which is a positive electrode active material is reduced while accepting the electron. In that case, the oxidation reaction of lithium is a process by which lithium metal releases electron and is converted to lithium cation form. In addition, the reduction reaction of sulfur is a process by which the S-S bond accepts two electrons and is converted to a sulfur anion form. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

The lithium-sulfur secondary battery may have problems of a low electrical conductivity of sulfur, a leaching and volume expansion of lithium polysulfide during charging/discharging, and a low coulombic efficiency and thus a rapid decrease in capacity as the charging/discharging is proceeded, so these problems must be solved to improve battery performance.

A porous carbon material is widely used in the lithium-sulfur secondary battery as a role to impart conductivity by complexing it with sulfur, which is an active material of the lithium-sulfur secondary battery. Researches to improve battery performance by controlling the size and volume of pores formed inside these porous carbon materials are continuously being conducted. Among them, in the case of a metal-organic framework (MOF), there are advantages that a porous carbon material with a high specific surface area of 1000 to 4000 m²/g can be synthesized by forming pores of various sizes depending on the type of organic molecules or metal atoms constituting the MOF. However, in the case of the technology of carbonizing the existing MOF material and applying it to the lithium-sulfur secondary battery, although the leaching problem of a lithium polysulfide can be improved to some extent, there may be a problem that due to the additional use of the MOF material with low conductivity, the overall weight of the electrode is increased, and the conductivity of the electrode is decreased. In addition, the techniques described above require complex preparing processes.

Accordingly, researches to improve the performance of the lithium-sulfur secondary battery are continuously being conducted in the related technology field.

### [Prior Art Document]

### [Patent Document]

(Non-Patent Document 1) Jianming Zheng et al., Lewis Acid-Base Interactions between Polysulfides and Metal Organic Framework in Lithium Sulfur Batteries, Nano Lett. 2014, 14, 2345-2352
(Non-Patent Document 2) Junwen Zhou et al., Rational Design of a Metal-Organic Framework Host for Sulfur Storage in Fast, Long-Cycle Li-S Batteries, Energy Environ. Sci., 2014, 7, 2715

CN 111276683 A discloses a silicon dioxide sulfur positive electrode rich in aluminum hydroxyl and a preparation method thereof.

CN 106927498 A discloses a method for preparing nanometer belt-shaped zinc sulfide, and a method for taking the nanometer belt-shaped zinc sulfide as a template for preparing a nitrogen-doped carbon/sulfur compound anode material, a preparation method and an application thereof.

KR 101523081 A discloses a method for manufacturing a complex of a cathode active material and a fluorine compound comprising a step of mixing a cathode active material, a metal sulfate, an alkali metal fluoride salt, and a solvent, to a complex of a cathode active material and a fluorine compound manufactured thereby, and to a lithium secondary battery comprising the same.

US 2012/107698 A1 discloses an electrochemical device, having an anode containing magnesium; a cathode stable to a voltage of at least 3.2 V relative to a magnesium reference; and an electrolyte containing a solvent and a LiCl complex of a magnesium halide salt of a sterically hindered secondary amine.

### [Disclosure]

### [Technical Problem]

In order to solve the above problems, it is an object of the present invention to provide a positive electrode for a lithium-sulfur secondary battery capable of improving the cycle performance of the battery by introducing a multivalent metal salt to the positive electrode.

### [Technical Solution]

According to a first aspect of the present invention, the present invention provides a positive electrode for a lithium-sulfur secondary battery comprising a positive electrode active material, an electrically conductive material, a binder, and a multivalent metal salt ;
wherein the multivalent metal salt comprises a cation selected from a group consisting of Mg²⁺ and Al³⁺ and an anion selected from a group consisting of OH⁻, CO₃²⁻, NO₃⁻, and SO₄²⁻; and
the positive electrode active material comprises sulfur-carbon composite.

In one embodiment of the present invention, the binder is a polymer compound having a functional group containing oxygen or nitrogen.

In one embodiment of the present invention, the binder is selected from a group consisting of polyacrylic acid, polyvinyl alcohol, polyacrylonitrile, and combinations thereof.

In one embodiment of the present invention, the multivalent metal salt is contained in an amount of 30 mol% to 100 mol% based on the number of moles of the polymer monomer of the binder.

In one embodiment of the present invention, the binder is contained in an amount of 5% to 20% by weight based on the total weight of positive electrode active material.

In one embodiment of the present invention, the electrically conductive material is selected from a group consisting of graphite, carbon black, electrically conductive fiber, metal powder, carbon fluoride, conductive whisker, electrically conductive metal oxide, polyphenylene derivatives and combinations thereof.

In one embodiment of the present invention, the electrically conductive material is contained in an amount of 5% to 20% by weight based on the total weight of positive electrode active material.

In one embodiment of the present invention, in the case of the positive electrode, the multivalent metal salt is added as an aqueous solution and then dried and introduced.

In one embodiment of the present invention, the multivalent metal salt in the state of aqueous solution is added before drying of the mixture of the positive electrode active material, the electrically conductive material and the binder, or applied after drying.

According to a second aspect of the present invention, a lithium-sulfur secondary battery including the above-described positive electrode is provided.

### [Advantageous Effects]

The positive electrode for a lithium-sulfur secondary battery according to the present invention can improve the performance of the lithium-sulfur secondary battery by simply introducing a multivalent metal salt and thus effectively inhibiting the leaching of lithium polysulfide when applied to the battery while not significantly increasing the weight of the electrode and not significantly lowering the conductivity of the electrode.

### [Description of Drawings]

FIG. 1 is a graph showing the result of thermogravimetric analysis of the sulfur-carbon composite according to Experimental Example 1.
FIG. 2 is a graph showing the result of thermogravimetric analysis of polyacrylic acid binder to which multivalent metal ions are fixed, according to Experimental Example 2.
FIG. 3 is a graph showing the analysis of the result of the capacity retention rate of the lithium-sulfur secondary battery according to Experimental Example 3.

### [Best Mode]

The embodiments provided according to the present invention can all be achieved by the following description. It is to be understood that the following description is to be understood as describing preferred embodiments of the present invention, and the present invention is not necessarily limited thereto.

With respect to the physical properties described herein, if measurement conditions and methods are not specifically described, the physical properties are measured according to measurement conditions and methods generally used by those skilled in the art.

The present invention provides a positive electrode for a lithium-sulfur secondary battery and a lithium-sulfur secondary battery comprising the same. Hereinafter, the positive electrode for the lithium-sulfur secondary battery and the remaining components (negative electrode, separator, electrolyte solution) of the lithium-sulfur secondary battery according to the present invention will be described in detail.

### Positive electrode for a lithium-sulfur secondary battery

The positive electrode for the lithium-sulfur secondary battery of the present invention comprises a positive electrode active material, an electrically conductive material, a binder, and a multivalent metal salt. The positive electrode may be divided into a positive electrode current collector and a positive electrode active material layer coated on the positive electrode current collector, and in this case, the above-described positive electrode active material, the electrically conductive material, the binder, and the multivalent metal salt are contained in the positive electrode active material layer.

The positive electrode active material constituting the positive electrode for the lithium-sulfur secondary battery according to the present invention comprises a sulfur-carbon composite. The sulfur-based compound as referred to herein may be Li₂Sₙ(n≥1), organosulfur compounds or carbon-sulfur polymers ((C₂Sₓ)ₙ: x=2.5 ~ 50, n≥2), etc. These sulfur materials are applied in combination with an electrically conductive material because they do not have electrical conductivity alone.The sulfur-carbon composite may be formed by mixing carbon and elemental sulfur or a sulfur-based compound to reduce the leakage of sulfur into the electrolyte and increase the electrical conductivity of an electrode containing sulfur. The ratio of the positive electrode active material in the positive electrode active material layer may be adjusted in consideration of the performance of a target battery. According to one embodiment of the present invention, the positive electrode active material layer contains 60 to 95 parts by weight of the positive electrode active material based on 100 parts by weight of the positive electrode active material layer.

The carbon material constituting the sulfur-carbon composite may be crystalline or amorphous carbon, and may be conductive carbon. Specifically, the carbon material may be selected from a group consisting of graphite, graphene, Super P, carbon black, Denka black, acetylene black, Ketjen black, channel black, furnace black, lamp black, thermal black, carbon fiber, carbon nanofiber, carbon nanotube, carbon nanowire, carbon nanoring, carbon fabric and fullerene (C₆₀).

An exemplary sulfur-carbon composite is a sulfur-carbon nanotube composite and the like. Specifically, the sulfur-carbon nanotube composite contains sulfur or a sulfur compound in a carbon nanotube aggregate having a three-dimensional structure and in at least a portion of an inner surface and an outer surface of the carbon nanotube aggregate. Since the sulfur-carbon nanotube composite according to one embodiment of the present invention contains sulfur existing inside the three-dimensional structure of the carbon nanotube, if the soluble polysulfide can be located inside the carbon nanotube even if the soluble polysulfide is generated by the electrochemical reaction, the collapse of structure of the positive electrode can be suppressed by keeping the entangled structure in three dimensions even when leaching the polysulfide. As a result, the lithium-sulfur secondary battery comprising the sulfur-carbon nanotube composite has an advantage that a high capacity can be implemented even at a high loading. Also, sulfur or the sulfur-based compound may be contained in the inner pores of the carbon nanotube aggregate. The carbon nanotube refers to a linear electrically conductive carbon and specifically, the carbon nanotube may be carbon nanotube (CNT), graphitic nanofiber (GNF), carbon nanofiber (CNF), or activated carbon fiber (ACF). Both single-wall carbon nanotubes (SWCNT) and multi-wall carbon nanotubes (MWCNT) can be used.

According to one embodiment of the present invention, the sulfur-carbon composite is prepared by impregnating sulfur or the sulfur-based compound on the outer surface and inside of the carbon, and can optionally be subjected to a step of adjusting the diameter of carbon before, after, or both before and after the impregnating step. The impregnating step may be carried out by mixing carbon with a powder of sulfur or the sulfur-based compound and then heating to impregnate carbon with molten sulfur or the sulfur-based compound, and such mixing can be performed by a dry ball mill method, a dry jet mill method or a dry Dyno-mill method. According to one embodiment of the present invention, the sulfur-carbon composite contains 60 to 90 parts by weight of sulfur or the sulfur-based compound based on 100 parts by weight of the sulfur-carbon composite. When the content of sulfur or the sulfur-based compound in the sulfur-carbon composite is adjusted within the above range, electrons are appropriately supplied to the non-conductive sulfur or sulfur-based compound while maintaining the content of the sulfur or sulfur-based compound at a high ratio. The sulfur-carbon composite has a porosity of more than a certain level because it has a form in which sulfur or the sulfur-based compound is supported on porous carbon. Accordingly, even if the positive electrode active material layer is sufficiently rolled to the extent that the structure of the sulfur-carbon composite is still maintained, the impregnation property of the electrolyte solution in the positive electrode active material layer is not deteriorated.

The electrically conductive material constituting the positive electrode for the lithium-sulfur secondary battery according to the present invention may be selected from graphite such as natural graphite or artificial graphite; carbon blacks such as acetylene black, Ketjen black, channel black, furnace black, lamp black, or thermal black; electrically conductive fibers such as carbon fiber or metal fiber; carbon fluoride; metal powders such as aluminum or nickel powder; electrically conductive whiskers such as zinc oxide and potassium titanate; electrically conductive metal oxides such as titanium oxide; or polyphenylene derivatives, but is not necessarily limited thereto. The ratio of the electrically conductive material in the positive electrode active material layer may be adjusted in consideration of the performance of a target battery. According to one embodiment of the present invention, the positive electrode active material layer contains 0.05 to 20 parts by weight, preferably 5 to 15 parts by weight, of the electrically conductive material based on 100 parts by weight of the positive electrode active material layer. The proportion of the electrically conductive material is also adjusted on the basis of the positive electrode active material. According to one embodiment of the present invention, the electrically conductive material may be contained in an amount of 5% to 20% by weight, preferably 10% to 15% by weight, based on the total weight of positive electrode active material.

The binder constituting the positive electrode for the lithium-sulfur battery according to the present invention basically has a function of assisting the bonding of the positive electrode active material and the electrically conductive material and their bonding to the current collector, and has an additional function of fixing the metal cation of the multivalent metal salt together with the above function in the present invention. In order to have the above-described functionality, the binder may be a polymer compound having a functional group containing oxygen or nitrogen. Oxygen or nitrogen atoms with high electronegativity are relatively rich in electrons in the polymer compound, and thus tend to be negatively charged, and metal cations are fixed to the binder by electrical attraction with metal cations. According to one embodiment of the present invention, the binder may be selected from a group consisting of polyacrylic acid, polyvinyl alcohol, polyacrylonitrile, and combinations thereof, and may preferably be polyacrylic acid.

In order to supplement the bonding force between the components constituting the positive electrode, the binder may be used in combination with at least one selected from a group consisting of, for example, vinylidene fluoride-hexafluoropropylene copolymer (PVDF-co-HFP), polyvinylidenefluoride, polymethylmethacrylate, carboxymethylcellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated-EPDM, styrenebutadiene rubber(SBR), and fluorine rubber. The ratio of the binder in the positive electrode active material layer may be adjusted in consideration of the desired performance of the battery. According to one embodiment of the present invention, the positive electrode active material layer comprises 1 to 30 parts by weight, preferably 3 to 20 parts by weight, more preferably 5 to 15 parts by weight of the binder, based on 100 parts by weight of the positive electrode active material layer. The ratio of the binder can also be adjusted based on the positive electrode active material. According to one embodiment of the present invention, the binder is contained in an amount of 5% to 20% by weight, preferably 10% to 15% by weight, based on the total weight of positive electrode active material.

The multivalent metal salt constituting the positive electrode for the lithium-sulfur secondary battery according to the present invention contains a multivalent metal cation selected from a group consisting of Mg²⁺ and Al³⁺. The multivalent metal cation can bind by electrical attraction with the negative charge generated when sulfur or sulfur-based material is reduced by accepting electrons during discharging of the lithium-sulfur secondary battery. However, since the multivalent metal cation is also not a macromolecule, it can leak from the positive electrode into the electrolyte solution, and thus in order to fix the negative charge, the multivalent metal cation also needs to be immobilized on a macromolecule. The multivalent metal cation can be fixed to the binder described above. In the polymer compound having a functional group containing oxygen or nitrogen as a binder, the oxygen or nitrogen portion having high electronegativity may have a negative charge, and the multivalent metal cation can be immobilized by electrical attraction. Since the multivalent metal cation has a multivalent positive charge, it can retain some positive charge even when combined with a binder by electrical attraction, and thus can fix sulfur or sulfur-based materials having a negative charge after discharging.

Since the multivalent metal salt does not have high functionality for improving the performance of the lithium-sulfur secondary battery between the positive electrode active material having a negative charge and the binder, even if it contains the multivalent metal cation, it is also necessary to appropriately select the types of cations and anions constituting the multivalent metal saltThe multivalent metal salt comprises a cation selected from a group consisting of Mg²⁺ and Al³⁺ and an anion selected from a group consisting of
OH⁻, CO₃²⁻, NO₃⁻, and SO₄²⁻.

The content of the multivalent metal salt may be determined by the content of the binder in the positive electrode active material layer. When the binder is a polymer compound having a functional group containing oxygen or nitrogen, since the number of functional groups having functionality is important, when determining the content of the multivalent metal salt, the number of moles of the monomer of the polymer binder is a criterion rather than the number of moles of the polymer binder. According to one embodiment of the present invention, the multivalent metal salt may be contained in an amount of 30 mol% to 100 mol% based on the number of moles of the polymer monomer of the binder. Specifically, the content of the multivalent metal salt based on the number of moles of the polymer monomer in the binder is 30 mol% or more, 40 mol% or more, 50 mol% or more, 60 mol% or more, 70 mol% or more, 80 mol% or more, 90 mol% or more, and 100 mol% or less, and 30 to 100 mol%, 50 to 100 mol%, 70 to 100 mol%. If the content of the multivalent metal salt is more than 100 mol% relative to the number of moles of the polymer monomer in the binder, the binder functional group cannot sufficiently fix the multivalent metal cation. In addition, if the content of the multivalent metal salt is less than 30 mol% relative to the number of moles of the polymer monomer in the binder, a plurality of binder functional groups is fixed to one multivalent metal cation, and thus the multivalent metal cation cannot sufficiently immobilize the negatively charged positive electrode active material.

The positive electrode is prepared by applying a slurry containing the positive electrode active material to one or both surfaces of the positive electrode current collector to form a positive electrode active material layer. The application may be performed by a method commonly known in the art, and for example, may be performed through a method such as a doctor blade, die casting, comma coating, and screen printing. The multivalent metal salt is added to the positive electrode in the state of aqueous solution. The multivalent metal salt in the state of aqueous solution is separated and remained into multivalent metal cations and anions, and the separated multivalent metal cations are easily fixed to the binder. According to one embodiment of the present invention, the concentration of the multivalent metal salt in the aqueous solution may be 0.05M to 0.5M, preferably 0.1M to 0.3M. The multivalent metal salt in the state of aqueous solution can be added directly to the slurry for the positive electrode active material composed of the positive electrode active material, the electrically conductive material and the binder, or applied on the dried layer after the slurry is applied to the positive electrode current collector and dried. If the multivalent metal salt in the state of aqueous solution is directly added to the slurry for the positive electrode active material, the functional multivalent metal salt can be uniformly dispersed in the positive electrode active material, which can be more advantageous for improving the performance of the lithium-sulfur secondary battery.

### Lithium-sulfur secondary battery

The lithium-sulfur secondary battery of the present invention comprises a positive electrode, a negative electrode, a separator, and an electrolyte solution. The positive electrode is as described in the above description, and the negative electrode, separator, and electrolyte solution will be described in detail below.

The negative electrode constituting the lithium-sulfur secondary battery according to the present invention comprises a negative electrode current collector and a negative electrode active material layer formed on the negative electrode current collector.

The negative electrode active material layer comprises a negative electrode active material, a binder, and an electrically conductive material. The negative electrode active material may be a material capable of reversibly intercalating or de-intercalating lithium ion (Li⁺), a material capable of reacting with lithium ion to reversibly form a lithium-containing compound, lithium metal or a lithium alloy.

The material capable of reversibly intercalating or de-intercalating lithium ion (Li⁻) may be, for example, crystalline carbon, amorphous carbon or mixtures thereof. The material capable of reacting with lithium ion (Li⁺) to reversibly form a lithium-containing compound may be, for example, tin oxide, titanium nitrate or silicon. The lithium alloy may be, for example, an alloy of lithium (Li) and the metal selected from a group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

The binder, the electrically conductive material, and the negative electrode current collector may be selected with reference to the configuration in the positive electrode described above, but, in the embodiment, is not necessarily selected to be the same as the positive electrode. In addition, the method of forming the negative electrode active material layer on the negative electrode current collector may be selected with reference to the method for the above-described positive electrode, but, in the embodiment, is not necessarily selected to be the same as the method for the positive electrode.

The separator for the lithium-sulfur secondary battery according to the present invention is a physical separator having a function of physically separating electrodes. The separator can be used without special restrictions, as long as it is used as a conventional separator. Particularly, a separator with excellent electrolyte solution humidification ability while exhibiting low resistance to ion migration of electrolyte solution is preferable. The separator enables the lithium ion to be transported between the positive electrode and the negative electrode while separating or insulating the positive electrode and the negative electrode from each other.

Such separator may be made of a porous, nonconductive, or insulating material having a porosity of 30% to 50%. Specifically, a porous polymer film, for example, a porous polymer film made of a polyolefin-based polymer such as ethylene homopolymer, propylene homopolymer, ethylene/butene copolymer, ethylene/hexene copolymer and ethylene/methacrylate copolymer, etc. may be used, and a nonwoven fabric made of glass fiber having high melting point or the like can be used. Among them, the porous polymer film is preferably used.

If the polymer film is used for both the buffer layer and the separator, the impregnation amount and ion conduction characteristics of the electrolyte solution are decreased and the effect of reducing the overvoltage and improving the capacity characteristics becomes insignificant. On the contrary, if the nonwoven fabric material is used for both the buffer layer and the separator, a mechanical stiffness cannot be ensured and thus a problem of short circuit of the battery occurs. However, if a film-type separator and a polymer nonwoven fabric buffer layer are used together, the mechanical strength can also be ensured together with the improvement effect of the battery performance due to the adoption of the buffer layer.

According to one embodiment of the present invention, the ethylene homopolymer (polyethylene) polymer film is used as a separator, and the polyimide nonwoven fabric is used as a buffer layer. In that case, it is preferable that the polyethylene polymer film has a thickness of 10*µ*m to 25*µ*m and a porosity of 40% to 50%.

The electrolyte solution constituting the lithium-sulfur secondary battery according to the present invention is a non-aqueous electrolyte solution containing a lithium salt and comprises a lithium salt and a solvent.

The lithium salt is a substance which can be easily dissolved in a non-aqueous organic solvent, and for example, may be at least one selected from a group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, lithium chloroborane, lithium lower aliphatic carboxylate, and lithium imide. In one embodiment of the present invention, the lithium salt may be preferably a lithium imide such as LiTFSI.

The concentration of the lithium salt may be 0.1M to 8.0M, preferably 0.5M to 5.0M, more preferably 1.0M to 3.0M depending on various factors such as the exact composition of the electrolyte solution mixture, the solubility of the salt, the conductivity of the dissolved salt, the charging and discharging conditions of the battery, the operating temperature and other factors known in the lithium secondary battery field. If the concentration of lithium salt is less than the above range, the conductivity of the electrolyte solution may be lowered, and thus the performance of the battery may be reduced. If the concentration of the lithium salt exceeds the above range, the viscosity of the electrolyte solution may be increased and the mobility of lithium ion (Li⁺) may be reduced. Accordingly, it is preferable to select an appropriate concentration within the above range.

The solvent can be used without particular limitation, as long as it is a non-aqueous solvent that serves as a medium through which ions involved in the electrochemical reaction of the battery can move. According to one embodiment of the present invention, the solvent may be a carbonate-based, ester-based, ether-based, ketone-based, alcohol-based or aprotic solvent.

Examples of the carbonate-based solvent may specifically comprise dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), or butylene carbonate (BC), etc.

Examples of the ester-based solvent may specifically comprise methyl acetate, ethyl acetate, n-propyl acetate, 1,1-dimethyl ethyl acetate, methyl propionate, ethyl propionate, γ-butyrolactone, decanolide, valerolactone, and mevalonolactone, carprolactone, etc.

Examples of the ether-based solvent may specifically comprise diethyl ether, dipropyl ether, dibutyl ether, dimethoxymethane, trimethoxymethane, dimethoxyethane, diethoxyethane, diglyme, triglyme, tetraglyme, tetrahydrofuran, 2-methyltetrahydrofuran, and polyethylene glycol dimethyl ether, etc.

Examples of the ketone-based solvent may specifically comprise cyclohexanone, etc.

Examples of the alcohol-based solvent may specifically comprise ethylalcohol, and isopropylalcohol, etc.

Examples of the aprotic solvent may specifically comprise nitriles such as acetonitrile, amides such as dimethylformamide, dioxolanes such as 1,3-dioxolane (DOL), and sulfolane, etc.

The non-aqueous organic solvents may be used alone or in combination of one or more. The mixing ratio when using in combination of one or more may be appropriately adjusted depending on the desired performance of the battery. In particular, a mixture solution of 1,3-dioxolane and dimethoxyethane in a 1:1 volume ratio may be preferable.

The lithium-sulfur secondary battery of the present invention can be manufactured by disposing a separator between a positive electrode and a negative electrode to form an electrode assembly and inserting the electrode assembly into a cylindrical battery case or a rectangular battery case, and then injecting an electrolyte. Alternatively, the lithium-sulfur secondary battery of the present invention can be manufactured by laminating the electrode assembly, impregnating the electrode assembly with the electrolyte, putting the obtained result into a battery case and then sealing it.

Hereinafter, preferred examples will be described in order to facilitate understanding of the present invention. However, the following examples are provided to facilitate understanding of the present invention, but the present invention is not limited thereto.

### Examples

### Example 1

3g of Ketjen black (Manufacturer: MICHIBISHI CHEMICAL, specification: 600JD) and 9g of sulfur were dispersed in 200ml of toluene, and heated and stirred at 60°C for 3 hours. The powder obtained by evaporating toluene was heated at 160 °C for 20 hours under an argon (Condition: 100 sccm) atmosphere to support molten sulfur in the pores of the porous carbon material. The resultant was heated in a vacuum oven at 50°C (Condition: 1 Pa or less) for 3 hours to prepare a sulfur-carbon composite.

The prepared sulfur-carbon composite (Positive electrode active material) is mixed with Super P carbon black (Manufacturer: TIMCAL, electrically conductive material) and polyacrylic acid (Molecular weight: M_{w} 450k, binder) in a weight ratio of 8:1:1, and a 0.1M Al₂(SO₄)₃ aqueous solution was further mixed with a polymer monomer of polyacrylic acid and Al₂(SO₄)₃ in a 1:1 molar ratio to prepare a slurry (Mixing condition: Elim Global 8000D, zirconia balls (1:1 mixture of diameters 6mm and 3mm), polypropylene vial). The slurry was applied to aluminum foil using a doctor blade (Application amount: 1.7mg/cm² based on sulfur weight (about 2mAh/cm²)), and then dried sequentially in air at 50°C and in vacuum at 50°C to manufacture a positive electrode (Effective nuclear charge of the outermost electron of Al: 4.066).

### Example 2

A positive electrode was manufactured in the same manner as in Example 1, except that as the aqueous solution of multivalent metal salt, a 0.2M MgSO₄ aqueous solution was used instead of the 0.1M Al₂(SO₄)₃ aqueous solution (Effective nuclear charge of the outermost electron of Mg: 3.308).

### Example 3

A positive electrode was manufactured in the same manner as in Example 1, except that as the aqueous solution of multivalent metal salt, a 0.2M ZnSO₄ aqueous solution was used instead of the 0.1M Al₂(SO₄)₃ aqueous solution (Effective nuclear charge of the outermost electron of Zn: 5.965) .

### Comparative Example 1

A positive electrode was manufactured in the same manner as in Example 1, except that a slurry was prepared without additional mixing of a 0.1M Al₂(SO₄)₃ aqueous solution.

### Experimental Example

### Experimental Example 1: Thermogravimetric analysis of sulfur-carbon composite

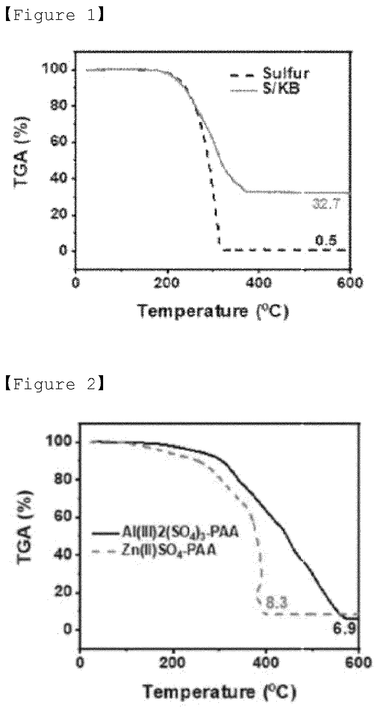

To confirm the weight of sulfur in the sulfur-carbon composite prepared in Example 1, thermogravimetric analysis was performed, and the results are shown in FIG. 1. The analysis apparatus and analysis conditions are as follows.

### <Thermogravimetric analysis>

Analysis device: Shimadzu TA 50
Analysis condition: argon 10mL/min, temperature increase rate 5°C/min, maximum temperature 600°C

According to FIG. 1, the sulfur-carbon composite (S/KB) prepared in Example 1 was confirmed to have a weight ratio of about 33:67 of the porous carbon material (Ketjen black) and sulfur.

### Experimental Example 2: Thermogravimetric analysis of polyacrylic acid binders to which multivalent metal ion is immobilized

In order to check the residual amount of multivalent metal ions remaining in the binder by stirring polyacrylic acid (PAA) and 0.1M of Al₂(SO₄)₃ or 0.2M of ZnSO₄ at a molar ratio of 1:1 (number of moles of monomer of polyacrylic acid:number of moles of Al₂(SO₄)₃ or ZnSO₄) at room temperature and then drying at 60°C after dialysis for 2 weeks, Thermogravimetric analysis was performed, and the results are shown in FIG. 2. Analysis device and Analysis condition are as follows.

### <Thermogravimetric analysis>

Analysis device: Shimadzu TA 50
Analysis condition: oxygen 10mL/min, temperature increase rate 5°C/min, maximum temperature 600°C

According to FIG. 2, after thermogravimetric analysis, a residual amount of Al2(SO4)3-PAA was confirmed to be 6.9%, and a residual amount of ZnSO4-PAA was confirmed to be 8.3%. Considering that the residual amount is related to the amount of metal that is not removed when equilibrium is reached by an excess of solvent and the thermogravimetric analysis is conducted under an oxygen atmosphere, the amount of the metal is measured in the form of an oxide. That is, a residual amount of 6.9% in Al₂(SO₄)₃-PAA means an amount of Al₂O₃, and a residual amount of 8.3% in ZnSO₄-PAA means the amount of ZnO. As a result of thermogravimetric analysis, it was confirmed that polyacrylic acid fixes the multivalent metal (Al or Zn) to a certain level or more through a carboxylic acid functional group.

### Experimental Example 3: Analysis of capacity retention rate of lithium-sulfur secondary battery

A positive electrode prepared according to the Example and Comparative Example was made with a diameter of 14 mm, and a separator (Celgard^{®} 2400, diameter 19 mm) and a negative electrode (Li chip, diameter 16 mm, thickness 160 *µ*m ) were laminated, and then placed in a coin battery case (2032 type coin cell (Welcos)), and an electrolyte solution was added to manufacture a coin cell. The electrolyte solution is prepared by adding 2M lithium bis(trifluoromethanesulfonyl)imide (LiTFSI) lithium salt and 0.1M LiNO₃ to the solvent obtained by mixing 1,3-dioxolane (DOL) and dimethoxyethane (DME).

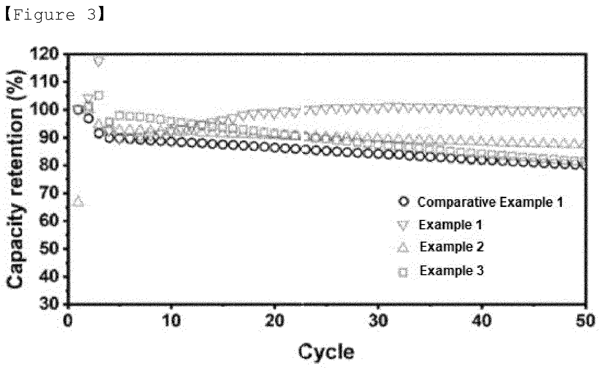

Capacity retention rate was analyzed by charging/discharging the manufactured coin cell, and the results are shown in FIG. 3. Analysis device and Analysis condition are as follows.

### <Analysis of cycle stability>

Analysis device: Wonatech WBCS3000L
Analysis condition: For the first 3 cycles, charging/discharging is performed under the condition of 0.5 A/g, and thereafter, charging/discharging is performed under the condition of 1A/g.

According to FIG. 3, it was confirmed that if the multivalent metal salt according to Examples 1 to 3 was added, the capacity retention rate according to the cycle of the lithium-sulfur secondary battery was improved. In particular, it was confirmed that if Al₂(SO₄)₃ of Example 1 and MgSO₄ of Example 2 were used, the mid- to long-term cycle performance was improved, and it was confirmed that if ZnSO₄ of Example 3 was used, the initial cycle performance was improved.

## Claims

1. A positive electrode for a lithium-sulfur secondary battery comprising a positive electrode active material, an electrically conductive material, a binder, and a multivalent metal salt;
wherein the multivalent metal salt comprises a cation selected from a group consisting of Mg²⁺ and Al³⁺ and an anion selected from a group consisting of OH⁻, CO₃²⁻, NO₃⁻, and SO₄²⁻; and
the positive electrode active material comprises sulfur-carbon composite.

2. The positive electrode for the lithium-sulfur secondary battery according to claim 1, wherein the binder is a polymer compound having a functional group containing oxygen or nitrogen.

3. The positive electrode for the lithium-sulfur secondary battery according to claim 2, wherein the binder is selected from a group consisting of polyacrylic acid, polyvinyl alcohol, polyacrylonitrile, and combinations thereof.

4. The positive electrode for the lithium-sulfur secondary battery according to claim 3, wherein the multivalent metal salt is contained in an amount of 30 mol% to 100 mol% based on the number of moles of the polymer monomer of the binder.

5. The positive electrode for the lithium-sulfur secondary battery according to claim 1, wherein the binder is contained in an amount of 5% to 20% by weight, based on the total weight of positive electrode active material.

6. The positive electrode for the lithium-sulfur secondary battery according to claim 1, wherein the electrically conductive material is selected from a group consisting of graphite, carbon black, electrically conductive fiber, metal powder, carbon fluoride, conductive whisker, electrically conductive metal oxide, polyphenylene derivatives, and combinations thereof.

7. The positive electrode for the lithium-sulfur secondary battery according to claim 1, wherein the electrically conductive material is contained in an amount of 5% to 20% by weight, based on the total weight of positive electrode active material.

8. The positive electrode for the lithium-sulfur secondary battery according to claim 1, wherein in the positive electrode, the multivalent metal salt is introduced in a manner that the multivalent metal salt is added as the state of aqueous solution and then dried.

9. The positive electrode for the lithium-sulfur secondary battery according to claim 8, wherein the multivalent metal salt in the state of aqueous solution is added before drying of the mixture of the positive electrode active material, the electrically conductive material and the binder, or applied after drying.

10. A lithium-sulfur secondary battery comprising the positive electrode according to claim 1.

## Patentansprüche

1. Positive Elektrode für eine Lithium-Schwefel-Sekundärbatterie, umfassend ein Positivelektrodenaktivmaterial, ein elektrisch leitfähiges Material, ein Bindemittel und ein mehrwertiges Metallsalz;
wobei das mehrwertige Metallsalz ein Kation, ausgewählt aus einer Gruppe bestehend aus Mg²⁺ und Al³⁺ , und ein Anion, ausgewählt aus einer Gruppe bestehend aus OH⁻, CO₃²⁻, NO₃⁻und SO₄²⁻ , umfasst; und
das Positivelektrodenaktivmaterial einen Schwefel-Kohlenstoff-Verbundstoff umfasst.

2. Positive Elektrode für die Lithium-Schwefel-Sekundärbatterie nach Anspruch 1, wobei das Bindemittel eine Polymerverbindung mit einer Sauerstoff oder Stickstoff enthaltenden funktionellen Gruppe ist.

3. Positive Elektrode für die Lithium-Schwefel-Sekundärbatterie nach Anspruch 2, wobei das Bindemittel aus einer Gruppe bestehend aus Polyacrylsäure, Polyvinylalkohol, Polyacrylnitril und Kombinationen davon ausgewählt ist.

4. Positive Elektrode für die Lithium-Schwefel-Sekundärbatterie nach Anspruch 3, wobei das mehrwertige Metallsalz in einer Menge von 30 Mol-% bis 100 Mol-%, bezogen auf die Anzahl der Mole des Polymermonomers des Bindemittels, enthalten ist.

5. Positive Elektrode für die Lithium-Schwefel-Sekundärbatterie nach Anspruch 1, wobei das Bindemittel in einer Menge von 5 Gew.-% bis 20 Gew.-%, bezogen auf das Gesamtgewicht des Positivelektrodenaktivmaterials, enthalten ist.

6. Positive Elektrode für die Lithium-Schwefel-Sekundärbatterie nach Anspruch 1, wobei das elektrisch leitfähige Material aus einer Gruppe bestehend aus Graphit, Ruß, elektrisch leitfähiger Faser, Metallpulver, Kohlenstofffluorid, leitfähigem Whisker, elektrisch leitfähigem Metalloxid, Polyphenylenderivaten und Kombinationen davon ausgewählt ist.

7. Positive Elektrode für die Lithium-Schwefel-Sekundärbatterie nach Anspruch 1, wobei das elektrisch leitfähige Material in einer Menge von 5 Gew.-% bis 20 Gew.-%, bezogen auf das Gesamtgewicht des Positivelektrodenaktivmaterials, enthalten ist.

8. Positive Elektrode für die Lithium-Schwefel-Sekundärbatterie nach Anspruch 1, wobei in die positive Elektrode das mehrwertige Metallsalz in einer Weise eingebracht wird, dass das mehrwertige Metallsalz als Zustand einer wässrigen Lösung zugegeben und dann getrocknet wird.

9. Positive Elektrode für die Lithium-Schwefel-Sekundärbatterie nach Anspruch 8, wobei das mehrwertige Metallsalz im Zustand einer wässrigen Lösung vor dem Trocknen der Mischung aus dem Positivelektrodenaktivmaterial, dem elektrisch leitfähigen Material und dem Bindemittel zugegeben oder nach dem Trocknen aufgebracht wird.

10. Lithium-Schwefel-Sekundärbatterie, umfassend die positive Elektrode nach Anspruch 1.

## Revendications

1. Électrode positive pour une batterie secondaire au lithium-soufre comprenant un matériau actif d'électrode positive, un matériau électro-conducteur, un liant, et un sel métallique multivalent ;
le sel métallique multivalent comprenant un cation sélectionné dans un groupe composé de Mg²⁺ et A1³⁺ et un anion sélectionné dans un groupe composé de OH⁻, CO₃²⁻, NO₃⁻, et SO₄²⁻; et
le matériau actif d'électrode positive comprenant un composé soufre-carbone.

2. Électrode positive pour la batterie secondaire au lithium-soufre selon la revendication 1, le liant étant un composé polymère possédant un groupe fonctionnel contenant de l'oxygène ou de l'azote.

3. Électrode positive pour la batterie secondaire au lithium-soufre selon la revendication 2, le liant étant sélectionné dans un groupe composé d'acide polyacrylique, d'alcool polyvinylique, de poly-acrylonitrile, et de combinaisons de ces derniers.

4. Électrode positive pour la batterie secondaire au lithium-soufre selon la revendication 3, le sel métallique multivalent étant contenu dans une quantité allant de 30 mol% à 100 mol% d'après le nombre de moles du monomère polymère du liant.

5. Électrode positive pour la batterie secondaire au lithium-soufre selon la revendication 1, le liant étant contenu dans une quantité allant de 5% à 20 % en poids d'après le poids total du matériau actif d'électrode positive.

6. Électrode positive pour la batterie secondaire au lithium-soufre selon la revendication 1, le matériau électro-conducteur étant sélectionné dans un groupe composé de graphite, de noir de carbone, d'une fibre électro-conductrice, d'une poudre métallique, de fluorure de carbone, de trichites conductrices, d'oxyde métallique électro-conducteur, de dérivés de polyéthylène, et de combinaisons de ces derniers.

7. Électrode positive pour la batterie secondaire au lithium-soufre selon la revendication 1, le matériau électro-conducteur étant contenu dans une quantité comprise entre 5% et 20% en poids, en fonction du poids total du matériau actif d'électrode positive.

8. Électrode positive pour la batterie secondaire au lithium-soufre selon la revendication 1, le sel métallique multivalent étant introduit, dans ladite électrode positive, de sorte que le sel métallique multivalent soit ajouté à l'état de solution aqueuse, puis séché.

9. Électrode positive pour la batterie secondaire au lithium-soufre selon la revendication 8, le sel métallique multivalent à l'état de solution aqueuse étant ajouté avant le séchage du mélange de matériau actif d'électrode positive, du matériau électro-conducteur, et du liant, ou appliqué après le séchage.

10. Batterie secondaire au lithium-soufre comprenant l'électrode positive selon la revendication 1.
